(19) Europäisches Patentamt
European Patent Office
Office européen des brevets

(11) **EP 3 842 954 A1**

(12) **EUROPEAN PATENT APPLICATION**

(43) Date of publication:
**30.06.2021 Bulletin 2021/26**

(51) Int Cl.:
***G06F 15/80*** *(2006.01)*     ***G06N 3/063*** *(2006.01)*

(21) Application number: **20198103.2**

(22) Date of filing: **24.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **28.12.2019 US 201916729381**

(71) Applicant: **INTEL Corporation**
**Santa Clara, CA 95054 (US)**

(72) Inventors:
- **PILLAI, Kamlesh R.**
  **560017 Bangalore (IN)**
- **KALSI, Gurpreet Singh**
  **560037 Banglore (IN)**
- **HUGHES, Christopher Justin**
  **Santa Clara, CA California 95051 (US)**

(74) Representative: **Samson & Partner Patentanwälte mbB**
**Widenmayerstraße 6**
**80538 München (DE)**

(54) **SYSTEM AND METHOD FOR CONFIGURABLE SYSTOLIC ARRAY WITH PARTIAL READ/WRITE**

(57)     A system is provided that includes a reconfigurable systolic array circuitry. The reconfigurable systolic array circuitry includes a first circuit block comprising one or more groups of processing elements and a second circuit block comprising one or more groups of processing elements. The reconfigurable systolic array circuitry further includes a first bias addition with accumulation circuitry configured to add a matrix bias to an accumulated value, to a multiplication product, or to a combination thereof. The reconfigurable systolic array circuitry additionally includes a first routing circuitry configured to route derivations from the first circuit block into the second circuit block, from the first circuit block into the first bias addition with accumulation circuitry, or into a combination thereof.

FIG. 1

EP 3 842 954 A1

**Description**

BACKGROUND

The present disclosure generally relates to systolic array-based accelerators and, more particularly, to systolic array-based accelerators with partial read/write.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The use of systolic array-based accelerators may provide for more efficient computations, such as those useful in Deep Neural Networks (DNNs)-based applications. The systolic array-based DNN accelerators may employ hundreds of arithmetic units, e.g., processing elements (PEs), to provide for the applications' computational engine. DNN accelerators may be more optimized for regular and fixed size dense matrix multiplications. For example, systolic array implementation of arithmetic units may be used to improve performance, decrease surface area and to gain power benefits. Accordingly, certain DNN accelerators may employ a dense two-dimensional (2D) array optimized for very regular dataflows. Many DNN accelerators may be relatively slow or inefficient.

BRIEF DESCRIPTION OF THE DRAWINGS

FIG. 1 is a block diagram of a data processing system including one or more processors having a reconfigurable systolic array-based accelerator circuitry, in accordance with an embodiment of the present disclosure;

FIG. 2 is a block diagram of an example of a systolic array system, in accordance with an embodiment of the present disclosure;

FIG. 3 is a block diagram of an embodiment of a scheduler that may be used to execute a reconfigurable systolic array system that includes partial bias accumulation support, in accordance with an embodiment of the present disclosure;

FIG. 4 is a block diagram showing further details of the reconfigurable systolic array system of FIG. 3, in accordance with an embodiment of the present disclosure;

FIG. 5 is a schematic diagram illustrating embodiments of reconfigurable routing circuitry and bias addition with accumulation circuitry, in accordance with an embodiment of the present disclosure;

FIG. 6 is a schematic diagram of an embodiment of the bias addition with accumulation circuitry illustrating further details, in accordance with an embodiment of the present disclosure;

FIG. 7 is a block diagram illustrating a reconfigurable systolic array system having multiple reconfigurable routing circuitry and bias addition with accumulation circuitry, in accordance with an embodiment of the present disclosure; and

FIG. 8 is a flowchart illustrating a process suitable for executing the circuitry of the reconfigurable systolic array systems, in accordance with an embodiment of the present disclosure.

DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The techniques described herein include certain systolic array techniques useful in improving certain computations, such as those computations used in Deep Neural Networks (DNNs). Systolic arrays may include a homogenous network of tightly coupled processing units where the processing units may be referred to as cells or nodes. Each node may include a processing element (PE) such as a fused multiply-add unit (FMA) that may be used to provide for various computations. Data may enter the systolic array, flow through the array's FMAs, e.g., between neighboring FMAs, and the results of the data flows may be provided as computations for certain applications, e.g., DNN applications. DNN systolic array accelerators may be more optimized for regular and fixed size dense matrix multiplications. For example, the DNN systolic array accelerators may employ a dense two-dimensional array more optimized for very regular data flows. Problems to be solved via the DNN systolic array accelerators that are either very large or small and/or that do not map well on to the regular data flows provided, may cause multiple reads/writes of partial results and/or heavy underutilization of the PEs in the systolic array.

Deep learning applications may be classified to include dense DNNs and sparse DNNs. For both dense and sparse DNNs some fraction of execution may perfectly map onto a regular dataflow for a given systolic array, but not all. For example, in case of dense DNNs, problem sizes may be quite large; and if an array computation for matrices A, B, and C involves equations such as C+=A*B, each matrix may be split into multiple tiles (e.g., 2D data structures) to "fit" the matrix into the systolic array. For example, to compute a single tile of C in a systolic array having x PEs in the X dimension and y PEs in the Y dimension, computations along all corresponding x, y tiles in the X dimension for A and in the Y dimension for B may be used. The X and Y dimension computations may require that partial results generated from each individual tile multiplication be written out and then read back for further processing (e.g., accumulation with other partial results) until the completion of all tiles in a single "chain" of accumulations. It is to be noted that a matrix may be smaller than a tile (e.g., use less space than all of a tile), the matrix may be the same size as a tile, or the matrix may use a plurality of tiles (e.g., the matrix is larger than the size of any one tile). A tile or tile data referred to herein may thus include arrays of data having N columns by M rows, and in some cases N = M. Rows and/or columns may be referred to herein as "groups."

In case of sparse DNNs, "block sparsity" processing may be present, where a matrix is represented by dense blocks of arbitrary size. Such a dense block representation may enable "skipping" over many or most zeros in a matrix since the zeros may not have to be represented. However, a side-effect of block sparsity is that when computing certain derivations, such as a general matrix multiply (GEMM) derivations, small and/or irregular-sized blocks may be found in input matrices. For all deep learning applications (sparse as well as dense), it would be beneficial to reduce the partial reads/writes and run multiple matrix multiplications with irregular widths on a systolic array such that the utilization of PEs is higher. Further, it would be beneficial to improve PE utilization while minimizing paying a performance, an area, and/or a power penalty on dense matrix multiplications that would currently fit into the systolic array size perfectly.

The techniques described herein include a reconfigurable systolic array with partial accumulation support. The accumulation support may include an accumulator storage separate from existing tile storage and suitable for handling multiple matrix multiplications via, for example, a scheduler. The scheduler may schedule an order in which matrices are submitted for execution, and new instruction(s) (e.g., macroinstructions) may be used to execute the data flows through the reconfigurable systolic array. A micro-architectural capability may be provided, to be used in checking a systolic array destination across multiple matrix multiplication instructions and in enabling hardware-based computations without software intervention if two (or more) instructions have the same destination without the destination being used (or overwritten) in between computations, as further described below. The reconfigurable systolic array includes accumulation logic system that may be enabled based on the tile being scheduled by the scheduler. The accumulation logic system may accumulate partial values until an end of the problem being solved and write a final output to storage (e.g., memory, a buffer, a register, and the like). By providing for reconfigurable systolic arrays, hardware-based computations may be more flexible along while additionally reducing data transfers between hardware and storage (e.g., a tile register file), thus improving utilization and lowering data transfers for certain applications, such as DNN-based applications.

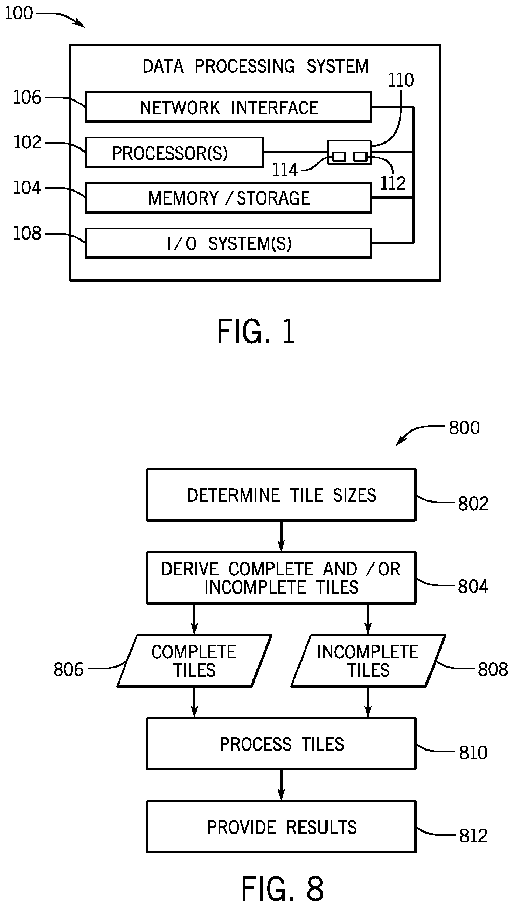

With the foregoing in mind, FIG. 1 is a block diagram of a data processing system 100 including one or more processor(s) 102, in accordance with an embodiment of the present disclosure. The data processing system 100 may include more or fewer components (e.g., electronic display, user interface structures, application specific integrated circuits (ASICs)) than shown. The data processing system 100 may execute certain code or computer instructions via the or more processors 102, such as an INTEL® 10th generation processor (e.g., Ice Lake processor) that may manage data processing requests for the data processing system 100 (e.g., to perform DNN computations, machine learning, video processing, voice recognition, image recognition, data compression, database search ranking, bioinformatics, network security pattern identification, spatial navigation, or the like). It should be noted that the term instruction herein may refer to a macroinstruction, e.g., an instruction that is provided to the processor 102 for execution, or to a microinstruction, e.g., an instruction that results from a processor's 102 decoder decoding macroinstructions. The decoder may be included in a core of the processor 102

The processor(s) 102 may communicate with the memory and/or storage circuitry 104, which may be a tangible, non-transitory, machine-readable-medium, such as random-access memory (RAM), read-only memory (ROM), one or more hard drives, flash memory, or any other suitable optical, magnetic or solid-state storage medium. The memory and/or storage circuitry 104 may hold data to be processed by the data processing system 100, such as processor-executable control software, configuration software, system parameters, configuration data, etc.

The data processing system 100 may also include a network interface 106 that allows the data processing system 100 to communicate with other electronic devices. In some embodiments, the data processing system 100 may be part of a data center that processes a variety of different requests. For instance, the data processing system 100 may receive a data processing request via the network interface 106 to perform DNN computations, machine learning, video processing, voice recognition, image recognition, data compression, database search ranking, bioinformatics, network security pattern identification, spatial navigation, or some other specialized task. The data processing system 100 may also include one or more input/output systems 108, such as display devices (e.g., computer monitors), keyboards, mice, speakers, voice input devices, and so on, useful for entering and/or displaying information.

In the depicted embodiment, the processor 102 may be operatively and/or communicatively coupled to reconfigurable systolic array system 110. The reconfigurable systolic array system 110 may include multiple processing elements (PEs) and certain circuitry suitable for routing data, including a reconfigurable routing system 112 that may be used to reconfigurably move data (e.g., data flows) through some (or all) of the PEs in the reconfigurable systolic array system 110. Accordingly, data, such as data to be used for DNN applications, may be provided to the reconfigurable systolic array system 110, for example, via the processor 102, and the reconfigurable systolic array system 110 may then more flexibly derive, e.g., via the reconfigurable routing system 112, an improved data flow as further described below. The reconfigurable systolic array system 110 may additionally include a bias addition with accumulation system 114, suitable for accumulating and adding certain bias data. For example, the bias addition with accumulation system 114 may accumulate partial computation values (e.g., matrix bias values) until an end of the problem being solved and write a final output to storage.

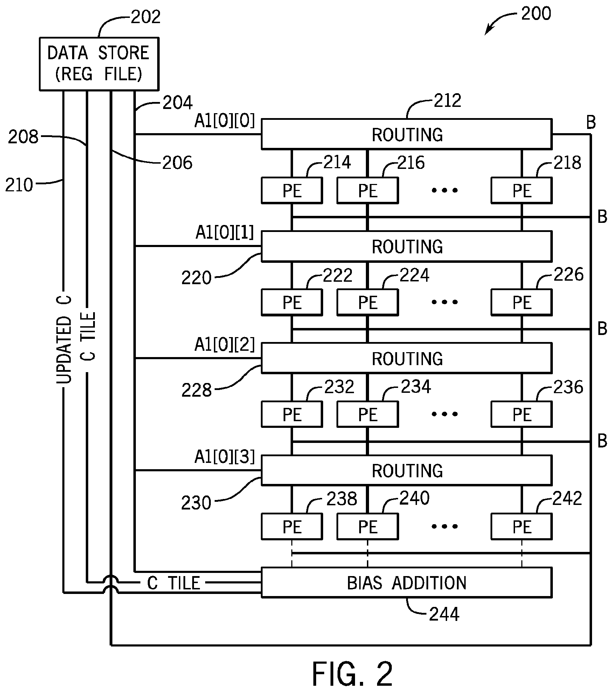

It may be beneficial to describe a systolic array system. Turning now to FIG. 2, the figure is a block diagram illustrating a systolic array system or circuitry 200 that may be used to solve certain problems, such as DNN-based problems, via data flows through processing elements (PEs) of the systolic array system 200. For example, the systolic array system 200 may be used to compute a variety of computations such as C+=A*B (e.g., *Updated*

$$c_{i,j} = c_{i,j} + \sum_{l=0}^{K-1} a_{i,l} * b_{l,j}$$

where K is a matrix row height).

In the depicted embodiment, a data storage (e.g., a register file having multiple registers, cache, buffer, etc.) 202 may be used to store data for matrices A, B, C, such as tile data. The data storage may use lines 204, 206, 208 and 210 to communicate matrix A tile data, matrix B tile data, matrix C tile data, and updated matrix C tile data, respectively. It is to be noted that each of lines 204, 206, 208, and 210 may include multiple conduits. That is, lines 204, 206, 208, and 210 may each be a port and each port may have multiple lines. A routing circuitry 212 may receive a value A[0][0] corresponding to a row 0 and column 0 of the matrix A and the routing circuitry 212 may then broadcast the first value A[0][0] to processing elements in a first row of the systolic array system 200, such as processing elements 214, 216, 218, and so on. The routing circuitry 212 may additionally receive values B[0][0], B[0][1], B[0][2], ..., B[0][K] representative of first row values in B and broadcast the values to processing elements 214., 216, 218, and so on. For example, processing element 214 may receive the value B[0][0], processing element 216 may receive the value B[0][1], and processing element 218 may receive the value B[0][K]. Some or all of the processing elements for a given row may then output results of certain operations, such as multiplication and addition operations, based on the inputs received. For example, processing element 214 may then output a result of multiplying A[0][0] * B[0][0], processing element 216 may output a result of multiplying A[0][0] * B[0][1], and processing element 218 may output a result of multiplying A[0][0] * B[0][K]. Outputs of the processing elements 214, 216, 218 may then be sent to routing circuitry 220.

Routing circuitry 220 may receive a value A[0][1] corresponding to a row 0 and column 1 of the matrix A and the routing circuitry 220 may then broadcast the value A[0][1] to processing elements in a second row of the systolic array system 200, such as processing elements 222, 224, 226, and so on. Likewise, the routing circuitry 220 may receive values B[1][0], B[1][1], B[1][2], ..., B[1][K] representative of second row values in B and broadcast the values to processing elements 222, 224, 226, and so on. For example, processing element 222 may receive the value B[1][0], processing element 224 may receive the value B[1][1], and processing element 226 may receive the value B[1][K]. Some or all of the processing elements for a given row may then output results of certain operations, such as multiplication operations, based on the inputs received. For example, processing element 222 may then output a result of multiplying A[0][1] * B[1][0] added to the output of processing element 214 to arrive at an output of A[0][1] * B[1][0] + A[0][0] * B[0][0]. Likewise, processing element 224 may then output a result of multiplying A[0][1] * B[1][1] added to the output of processing element 216 to arrive at an output of A[0][1] * B[1][1] + A[0][0] * B[0][1]. Similarly, processing element 226 may then output a result of multiplying A[0][1] * B[1][K] added to the output of processing element 218 to arrive at an output of A[0][1] * B[1][K] + A[0][0] * B[0][K]. Such a multiply/add operation may be referred to as a fused multiply-add, and may use a fused multiply-add unit (FMA) included in each processing element. Outputs of the processing elements 222, 224, 226 may then be sent to routing circuitry 228.

In a similar manner, routing circuitry 228 and 230 may receive matrix A data A[0][2] and A[0][3] respectively, and broadcast the data to processing elements of their respective rows, e.g., processing elements 232, 234, 236 for routing circuitry 228 and processing elements 238, 240, 242 for routing circuitry 230. Likewise, routing circuitry 228 and 230 may receive matrix B data for a third and a fourth row of matrix, and pass the third row data to processing elements 232, 234, 236 and the fourth row data to processing elements 238, 240, 242, respectively. Processing elements 232, 234, 236, 238, 240, and 242 may also provide for FMA functionality, thus multiplying and adding as described above based on inputs received, including matrix A inputs, matrix B inputs, and the outputs of the previous processing elements in the systolic array system 200. Indeed, all processing elements shown may include a fused multiply-add unit.

A bias addition circuitry 244 may then be used to, for example, to add and/or update matrix C with the operations previously performed on matrices A, B. e.g., C+= A*B (e.g., adding a bias from matrix C into the respective resultants from processing elements 238, 240, 242). For example, a matrix C value received via line(s) 208 may be added to outputs of the processing elements 238, 240, 242, and so on, and stored as update matrix C via line(s) 210. It is to be understood that while the embodiment of the systolic array system 200 is shown as having four rows of processing elements, other embodiments may include more rows or less rows. In certain embodiments, the systolic array system 200 may use 32 processing elements per row. When processing a dense DNN workload, for example, having a matrix width of 128, the matrix to be processed may be divided into four tiles having 32 columns per tile. Every tile may have a partial result written, e.g., in data store 202, and then read back for adding to the following tile's results. Accordingly, 4 writes and 4 reads may be used for reach tile to complete the dense DNN workload. As the data store 202 increases in capacity, a power used and latency may grow.

During derivations for sparse DNN workloads, such as workloads having matrix sizes of 4, 16, and or 36, the matrices may undergo sparsity compression via techniques such as block sparsity, compress sparse column/row (CSC/CSR), direct indexing/step indexing, and so on, to result in a matrix of size 32. If the systolic array system 200 is "padded" by using zeros, the systolic array system 200 may process a file width tile having a 32 element width (out of 36 elements) on a first pass, followed by a tile with 4 remaining elements, followed by a tile with 16 elements, and then followed by a tile with 4 elements. Accordingly, overall efficiency for the systolic array system 200 may be of 43.75%, which may be calculated by finding the average of 32/32 = 100%, 4/32 = 12.5%, 16/32 = 50% and 4/32 = 12.5%. It may be beneficial to improve processing of both dense DNN as well as sparse DNN workloads, for example by using a reconfigurable systolic array with partial accumulation support.

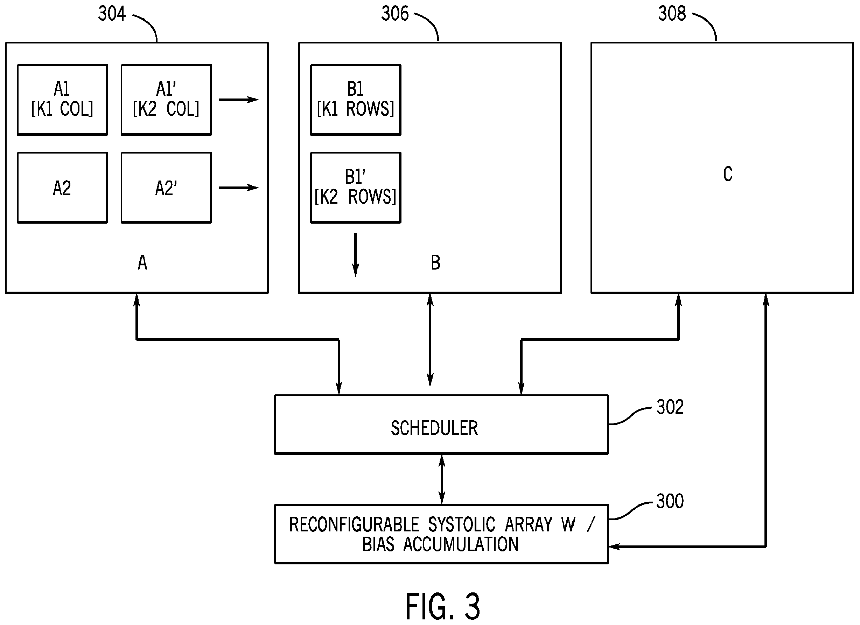

Turning now to FIG. 3, the figure is a block diagram of an embodiment of a reconfigurable systolic array circuitry or system 300 that includes partial bias accumulation support (e.g., a bias accumulator storage separate from an existing tile storage) suitable for processing multiple matrix multiplications via a scheduler 302. The scheduler may, for example, be implemented as software in a host processor (CPU), e.g., processor 102, as hardware circuitry, or as a combination thereof, operatively coupled to the reconfigurable systolic array system 300. In the depicted embodiment, the scheduler 302 may schedule an order in which matrices, e.g., matrices of type A 304, B 306, and/or C 308 are submitted for processing into the reconfigurable systolic array system 300.

The scheduler 302 may reorder certain tiles of matrices A 304, B 306 before submitting the tiles for execution via the reconfigurable systolic array system 300. The scheduler 302 may also resize or "break" the tiles into sub tiles to take advantage of bias accumulator storage and logic included in the reconfigurable systolic array system 300. Tiles that have not been divided in to sub tiles may be referred to as "complete" tiles, and processing the complete tiles may not use bias accumulation. In one example, if there are x read/write ports for communicating a result matrix (.e.g., matrix C 308), the scheduler may schedule no more than x complete tiles at any given time. Tiles that have been divided into sub tiles may be referred to as "incomplete" tiles. Incomplete tiles may be accumulated in the bias accumulator storage, for example, until the last sub tile is scheduled and a final result is written out to storage. The system and methods described herein may include new macroinstructions that process both complete and incomplete tiles, that indicate which tiles are complete or incomplete, and that indicate tile dimensions, as further described below.

The systems and methods described herein may also support a re-layout of matrix data in cases having smaller matrix sizes based on scheduler 302 outputs, so that, for example, a single A tile may be fetched while storing and/or processing multiple A matrices 304 side-by-side. In the depicted embodiment, A1 and A2 may belong to the same A matrix, while A1' and A2' may belong to another A matrix. Depending on the application, a B tile may be formed by either replicating or copying the same B matrix or by "stitching" multiple B matrices. In the depicted example, B1 and B1' are from a different B matrix. However, B1 may be replicated so that B1=B1' for certain applications.

In certain embodiments, matrices of type C 308 may be read from the input buffer and the input buffer's bandwidth may be limited to x reads per cycles. Accordingly, the scheduler 302 may schedule at most N complete tiles for execution at every pass of the reconfigurable systolic array 300, thus improving utilization of C type matrix 308 bandwidth. In a conventional matrix multiplication, C1 += A1*B1 + A1'*B1'+... However, when A and A' are different complete tile matrices that have been "glued" or merged together, a different operation may be used. Instead, the hardware (or software) may perform fewer operations per output element, e.g., C1 += A1*B1 and C1'+=A2*B1'. However, there may more output elements than in the usual matrix multiplication. These extra output elements may either be stored into storage or registers inside a bias accumulator circuitry or multiple independent destinations may be used to write to storage, based on, for example "complete" and "incomplete" tile bits coming from the scheduler 302.

As mentioned earlier, the systems and methods described herein may provide for one or more macroinstructions suitable for reconfigurable matrix multiplication with bias addition accumulation. A new instruction set may include TPNDPMAC, "tile partial 'N' dot product with 'M' accumulate", where the N is a number of different matrices that may have been merged together, and M is a number of matrices that are incomplete (e.g., matrices that may use bias accumulation circuitry). For example, if two matrices where merged as A for input into the into the reconfigurable systolic array system 300, one of which would use bias accumulation logic, and two matrices where merged into one B tile, the instruction to use would be TP2DP1AC.

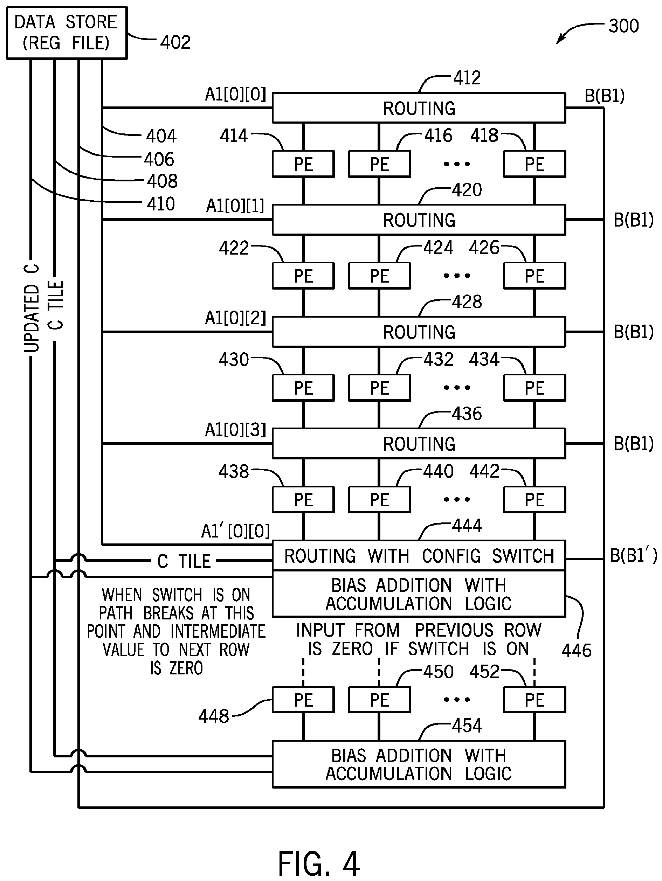

In one embodiment, a format for the instruction is TPNDPMAC tsrcdest, tsrc1, tsrc2. When N=1, there may be a single matrix C source/destination, pointed to by tsrcdest. When N>1, multiple C tiles may be consecutive, starting with tsrcdest (e.g., tmm0 and tmm1, if tsrcdest is tmm0 and N=2), followed by tsrc1, and then tsrc2 to choose a group of multiple registers. The TPNDPMAC instruction may be implemented using the reconfigurable systolic array system 300, as described with respect to FIG. 4.

FIG. 4 is a block diagram illustrating an embodiment of the reconfigurable systolic array circuitry or system 300 suitable for certain routing reconfiguration and for bias accumulation. In the depicted embodiment, certain components of the reconfigurable systolic array system 300 may behave similarly to those found in the systolic array system 200. For example, a data storage (e.g., a register file having multiple registers) 402 may be used to store data for matrix types A 304, B 306, and C 308, such as tile data. The data storage 402 may use lines 404, 406, 408 and 410 to communicate matrix A tile data, matrix B tile data, matrix C tile data, and updated matrix C tile data, respectively. It is to be noted that each of lines 404, 406, 408, and 410 may include multiple conduits. That is, lines 404, 406, 408, and 410 may each be a port and each port may have multiple conduits or lines. A routing circuitry 412 may receive a value A[0][0] corresponding to a row 0 and column 0 of the matrix A and the routing circuitry 412 may then broadcast the first value A[0][0] to processing elements in a first row of the systolic array system 200, such as processing elements 414, 416, 418, and so on. The routing circuitry 412 may additionally receive values B[0][0], B[0][1], B[0][2], ..., B[0][K] representative of first row values in B and broadcast the values to processing elements 414, 416, 418, and so on. For example, processing element 414 may receive the value B[0][0], processing element 416 may receive the value B[0][1], and processing element 418 may receive the value B[0][K]. Some or all of the processing elements for a given row may then output results of certain operations, such as multiplication operations, based on the inputs received. For example, processing element 414 may then output a result of multiplying A[0][0] * B[0][0], processing element 416 may output a result of multiplying A[0][0] * B[0][1], and processing element 418 may output a result of multiplying A[0][0] * B[0][K]. Outputs of the processing elements 414, 416, 418 may then be sent to routing circuitry 420.

Routing circuitry 420 may route data to processing elements 422, 424, 426, which in turn may apply FMA techniques to multiply and add data, as the data cascades "down" from processing elements 414, 416, and 418. Likewise, routing circuitry 428 may route data to processing elements 430, 432, 434, which in turn may apply FMA techniques to multiply and add data, as the data cascades "down" from processing elements 422, 424, and 426, and routing circuitry 436 may route data to processing elements 438, 440, 442, which in turn may apply FMA techniques to multiply and add data, as the data cascades "down" from processing elements 430, 432, and 434.

The depicted embodiment includes a reconfigurable routing circuitry 444 (e.g., routing circuitry with configuration switches). Unlike routing circuitry 412, 420, 428, 436, the reconfigurable routing circuitry 444 may route data differently based on at least two modes of operations. For example, in a first mode of operations, a configuration switch included in the reconfigurable routing circuitry 444 may be turned on, and a "break" of the chain of the dot product being derived (e.g., A*B) may result, beginning a new chain. If the configuration switch is turned off, the reconfigurable systolic array 300 may behave as a single pipeline with one output. Accordingly, when a value is inserted at the top of the pipeline (e.g., first row of the reconfigurable systolic array system 300) for processing, results may "cascade" and flow downwards until the results encounter the reconfigurable routing circuitry 444 having a configuration switch which is turned on. At this stage, the pipeline may "break" the resultant values to be written to a first bias addition with accumulation circuitry 446. After adding the resultant values to the corresponding matrix C elements, the updated values may be written out, and the next stage in the pipe gets loaded as if the previous processing element output value was zero. Thus, the encounter of the cascading value with the reconfigurable routing circuitry 444 having a configuration switch which is turned on may be thought of as a start of a new pipeline. It is to be understood that multiple reconfigurable routing circuitry 444 may be used, for example, the reconfigurable routing circuitry 444 may be disposed after every fourth row, and so on, in an 8 row reconfigurable systolic array system 300, and thus multiple reconfigurable routing circuitries 444 may be used.

In one embodiment, when in the first mode of operations, the values stored in a first plurality of registers of the data store 402 may represent a single input two-dimensional matrix A, the values stored in a second plurality of registers of the data store 402 may represent a single input two-dimensional matrix B, while the values stored in a third plurality of registers of the data store 402 may represent a single input two-dimensional matrix C. When in the second mode of operations, the values stored in the first plurality of registers of the data store 402 may represent multiple input two-dimensional matrices A and A', the values stored in the second plurality of registers of the data store 402 may represent multiple input two-dimensional matrices B and B', while the values stored in a third plurality of registers of the data store 402 may represent multiple input two-dimensional matrices C and C'.

In certain embodiments, during execution in the first mode of operations, the reconfigurable systolic array system 300 may send values from tile A and tile B to a respective routing circuit. For example, the operation may be to multiply matrix A from tile A by matrix B from tile B and then add a respective resultant to a corresponding value in matrix C from tile C when in the first mode of operations, and multiply matrix A from tile A by matrix B from tile B and then add a respective resultant to a corresponding value in matrix C from tile C as well as multiply matrix A' from tile A by matrix B' from tile B and then add a respective resultant to a corresponding value in matrix C' from tile C when in the second mode of operations. In the first mode of operations, the outputs of processing elements 438, 440, 442, may bypass the first bias addition with accumulation circuitry 446 and be provide directly to processing elements 448, 450, 452. The processing elements 448, 450, 452 may then apply a multiplication and addition as described above, and then provide respective outputs to a second bias addition with accumulation circuitry 454. The second bias addition with accumulation circuitry 454 may then use the provided outputs from processing elements 448, 450, 452 to update matrix C.

In the second mode of operations, the outputs of processing elements 438, 440, 442, may be used by the first bias addition with accumulation circuitry 446, for example, to add and store certain values. As mentioned earlier, when the reconfigurable routing circuitry 444 has a configuration switch turned on, the reconfigurable routing circuitry 444 may multiply and add the values provided as input, send the resultant to update matrix C, but also accumulate the resultant (e.g., resultant of the multiplication and addition) for use in a later derivation. In the second mode of operations, the processing elements 448, 450, 452 may receive zeros instead of the outputs of processing elements 438, 440, 442, and thus operations beginning at the processing elements 448, 450, 452 may proceed as a new pipeline. The second bias addition with accumulation circuitry 454 may have an accumulation switch switched off to provide for first mode operations (e.g., bypassing accumulation of values) or switched on for second mode operations.

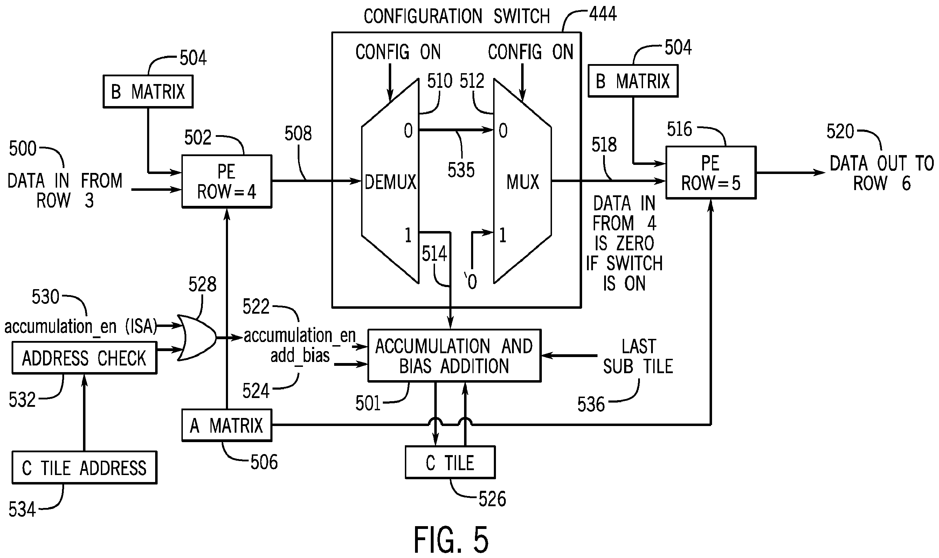

FIG. 5 is a schematic diagram illustrating embodiments of reconfigurable routing circuitry 444 and of bias addition with accumulation circuitry 501 (e.g., equivalent to circuitry 446 or 454). In the depicted embodiment, data 500 from a row of processing elements (e.g., row 3) of the reconfigurable systolic array system 300 may be provided to a downstream row 502 (e.g., row 4) of the reconfigurable systolic array system 300. The downstream row 502 of processing elements may also receive matrix B data 504, and matrix A data 506. The processing elements in row 502 may then provide outputs to the reconfigurable routing circuitry 444, for example, via lines 508.

The reconfigurable routing circuitry 444 may include a demultiplexer 510 and a multiplexer 512 so that both the demultiplexer 510 and a multiplexer 512 are used as a switch. That is, the demultiplexer 510 and the multiplexer 512 may receive the same signal (e.g., configuration on or off signal) and together act as a switch for data routing. When the reconfigurable routing circuitry 444 is turned on via the selectors into the demultiplexer 510 and the multiplexer 512, the demultiplexer 510 may write out outputs derived via row 502 processing elements to the bias addition with accumulation circuitry 501 via lines 514. In turn, the multiplexer 512 may send zeroes to a downstream row 516 (e.g., row 5) processing elements, for example, via lines 518. Accordingly, row 516 processing elements may not use data from row 502, and instead use matrix B data 504 and matrix A data 506 to derive outputs 520, which may then be sent to the next downstream row (e.g., row 6).

If an accumulation enable signal 522 is turned on, the bias addition with accumulation circuitry 501 may add a bias 524 to a C tile 526 as well as store or otherwise accumulate the result. The accumulation enable signal 522 may be turned on by using an OR gate 528 that derives a Boolean OR of an accumulation enable signal 530 (e.g., a signal based on the execution of a macroinstruction) received by a and an address check signal 532. The address check signal 532 may be representative of a matrix C tile address 534. More specifically, microarchitecture support may be provided, so that the C tile address 534 is checked in hardware to determine if a destination collision is about to occur, e.g., two matrix operations share the same matrix C destination address. If the address is the same, then the accumulation logic is turned on automatically, for example, to prevent an overwrite of the destination. Once a last sub tile bit 536 is received (e.g., incoming from the scheduler 302), the bias addition with accumulation circuitry 501 may add all accumulated values, for example, across all registers. That is, the last sub tile bit 536 may indicate that all sub tiles have now been submitted, and thus any accumulated values may now be added and stored via the bias addition with accumulation circuitry 501.

When the reconfigurable routing circuitry 444 is turned off (e.g., via the selectors into the demultiplexer 510 and the multiplexer 512), the demultiplexer 510 may transmit outputs derived by row 502 processing elements to the multiplexer 512 via lines 535 The multiplexer 512 may then also transmit the outputs derived by row 502 processing elements to downstream row 516 via lines 518. Accordingly, turning off the reconfigurable routing circuitry 444 may result in the reconfigurable routing circuitry 444 acting as a pass-through switch between row 502 processing elements and row 516 processing elements. By providing for the reconfigurable routing circuitry 444, the techniques described herein may enable a more efficient routing of data through the reconfigurable systolic array system 300.

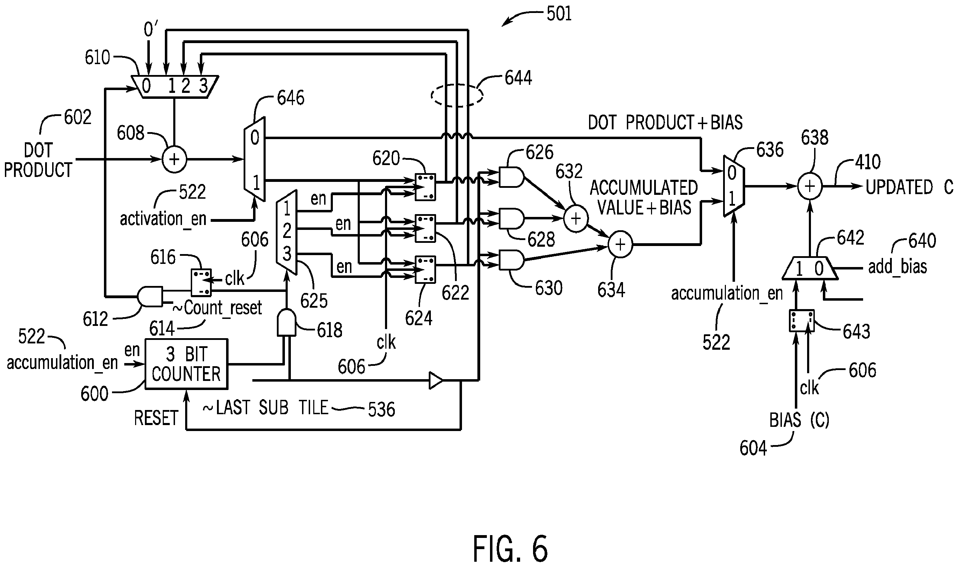

FIG. 6 is a schematic diagram of an embodiment of the bias addition with accumulation circuitry 501 illustrating further details. The bias addition with accumulation circuitry 501 may be designed to account for certain latency (e.g., adder latency) by using matching stages of memory storage. For example, 3 stages may be used to match a latency of 3, 4 stages may be used to match a latency of 4 (e.g., $2^3+1$), and so on. In the depicted embodiment, a counter 600 may be used to count based on latency. Thus, a 3-bit counter may be used for a latency of 3, a 4-bit counter may be used for a latency greater than 7, and so on. a\Accordingly a size for multiplex selecting the appropriate value may also increase. Inputs into the addition with accumulation circuitry 501 may include a dot product 602 (e.g., A*B from a row of the reconfigurable systolic array 300), a bias 604 to add (e.g., matrix C via lines 408 shown in FIG. 4), a clock signal 606 (e.g., reconfigurable systolic array 300 clock), the last sub tile signal 536 (also shown in FIG. 5), and the accumulation enable signal 522 (also shown in FIG. 5).

During operations, adder 608 may add the dot product 602 with an output from multiplexer 610. The multiplexer 610 outputs may be selected via a signal from an AND gate 612. The AND gate 612 may perform a Boolean AND between a count reset signal 614 and an output from a clock flip flop 616. The clock flip flop 616 may store data outputted from an AND gate 618. For example, the AND gate 618 may perform a Boolean AND operation between an output of the counter 600 and the last sub tile signal 536. When the accumulation enable signal 522 is on, the counter 600 may direct storage of the dot product 602 in storage circuitry (e.g., storage components such as flip flops) 620, 622, 624 as the clock signal 606 is transmitted, for example, by selecting demultiplexer 625.

The last sub tile signal 536 may then result in the storage 620, 622, 624 passing accumulated data values through AND gates 626, 628, 630 to be added via adders 632, 634. Accumulated data values may then be selected as output of a multiplexer 636 using the accumulation enable signal 522. Adder 638 may be used to add the accumulated data values to the matrix C bias 604 via an add bias selector signal of a multiplexor 642. The matrix C bias 604 may be incoming from storage 643. Result of the addition may then be provided to the updated matrix C, for example, via lines 410 (also shown in FIG. 4). As mentioned earlier, the bias addition with accumulation circuitry 501 may be designed with certain latency in mind. In the depicted example, the 3 storages 620, 622, 624 may handle a latency of 3 or less. However, sometimes latency may increase during operations. Should latency increase, lines 644 may be used to continuously accumulate values in a loop by adding, e.g., via adder 608, new dot products 602 with older values stored in the storage 620, 622, 624. If the accumulation enable signal 522 is turned off, the dot product 602 may traverse a demultiplexer 646, then traverse the multiplexer 636, to be subsequently added by the adder 638 to the matrix C bias 604. By providing for the bias addition with accumulation circuitry 501, the techniques described herein may more efficiently process both dense as well as sparse DNNs, as well as provide for more flexible systolic array-based computations.

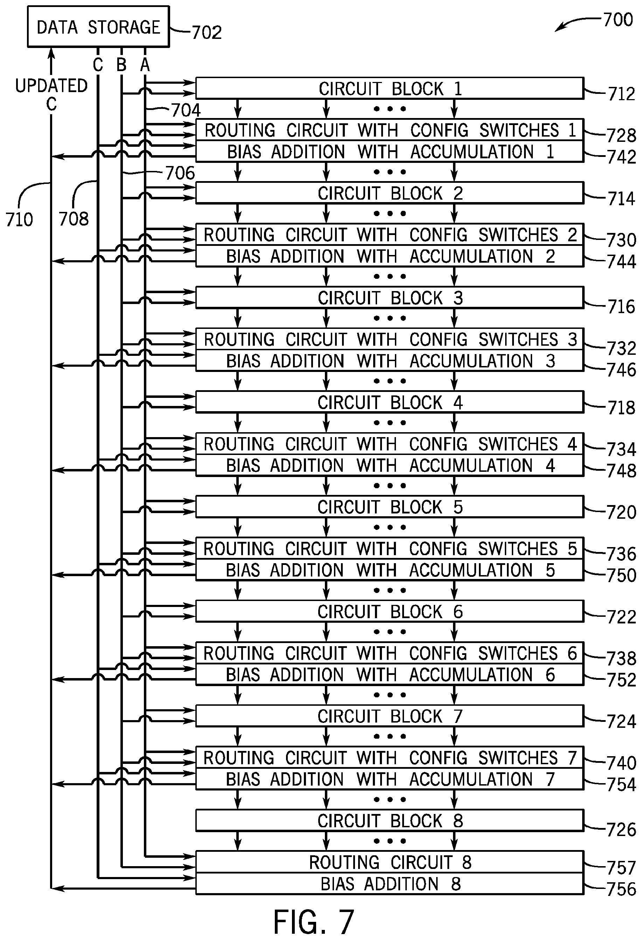

As mentioned earlier, multiple reconfigurable routing circuitry 444 may be used. Likewise, multiple bias addition with accumulation circuitry, e.g., bias addition with accumulation circuitry 501, may be provided. Turning now to FIG. 7, the figure is a block diagram illustrating a reconfigurable systolic array system 700 that includes multiple routing circuitry and multiple bias addition with accumulation circuitry (e.g., partial bias accumulation support). In the depicted embodiment, the systolic array system 700 includes a data storage 702 (e.g., register file having multiple registers). The data storage 702 may use lines 704, 706, 708 and 710 to communicate matrix A tile data, matrix B tile data, matrix C tile data, and updated matrix C tile data, respectively. It is to be noted that each of lines 704, 706, 708 and 710 may include multiple conduits. That is, lines 704, 706, 708 and 710 may each be a port and each port may have multiple conduits or lines.

The depicted embodiment also includes 8 circuit blocks 712, 714, 716, 718, 720, 722, 724, 726. Each of the circuit blocks 712, 714, 716, 718, 720, 722, 724, 726 may include one or more rows of processing elements, where a processing element may include a fused multiply add unit (FMA). In one embodiment, such as when the reconfigurable systolic array system 700 has 32 rows of processing elements, each of the circuit blocks 712, 714, 716, 718, 720, 722, 724, 726 may include 4 rows of processing elements. As data enters the first circuit block 712, data may be processed in a cascaded manner, subsequently flowing through the circuit blocks 714, 716, 718, 720, 722, 724, and 726 in cascading order to compute, for example, C += A*B.

As illustrated a reconfigurable routing circuitry 728, 730, 732, 734, 736, 738, 740 may be disposed downstream of the circuit blocks 712, 714, 716, 718, 720, 722, 724. Each of the reconfigurable routing circuitry 728, 730, 732, 734, 736, 738, 740 may enable, e.g., via switching, the flow of data into a downstream bias addition with accumulation circuitry 742, 744, 746, 748, 750, 752, 754. The reconfigurable routing circuitry 728, 730, 732, 734, 736, 738, 740 may additionally enable the creation of a "new" pipeline, for example, when switched on as previously described. Each of the bias addition with accumulation circuitry 742, 744, 746, 748, 750, and 752 may be suitable for adding a bias to a dot product and for adding an accumulated value to a bias, as described in FIG. 6 above. A routing circuitry 757 may not include switching capability, and thus may transmit data to the bias addition circuitry 756 by passing on output values from the circuitry block 726 directly for bias addition without accumulation. Accordingly, the reconfigurable systolic array system 700 may more efficiently and flexibly derive a variety of computations, including C += A*B.

To use the techniques described herein programmatically, certain instructions (e.g., macroinstructions) are provided. For example, TPNDPMAC may result in the programmatic use of instructions such as TP2DP1AC, or "tile partial 2 dot product with 1 accumulate". The TP2DP1AC instruction may process two evenly-sized matrices merged together by turning on a reconfigurable routing circuitry in the middle of the array of processing elements (e.g., reconfigurable routing circuitry 734) and switching on a corresponding bias addition with accumulation circuitry, (e.g., bias addition with accumulation circuitry 748).

When matrices of different sizes are merged together, a TSZDP "tile sizes for dot products" macroinstruction may be used. In one embodiment, the TSZDP macroinstruction may take an immediate, in addition to the A, B, and C register operands, that specifies the size of the matrices merged together. In another embodiment, the sizes may be encoded. For example, when merging matrices is supported, such as matrices having some multiple of 4 (e.g., up to 32), we may encode the various matrix sizes as follows:

Table 1

| Immediate encoding | First K size (K1) | Second K size (K2) | Third K size(K3) | Fourth K size(K4} | Fifth K size (K5) | Sixth K size (K6) | Seventh K Size (K7) | Eighth K size (K8) | Decoder output | Configuration Switch |
|---|---|---|---|---|---|---|---|---|---|---|
| 0000000 | 32 | 0 | 0 | 0 | 0 | 0 | 0 | 0 | 0000000 | All switches are down |
| 0000001 | 4 | 28 | 0 | 0 | 0 | 0 | 0 | 0 | 0000001 | Switch 1 is turned on |
| 0000010 | 8 | 24 | 0 | 0 | 0 | 0 | 0 | 0 | 0000010 | Switch 2 is turned on |
| 0000011 | 4 | 4 | 24 | 0 | 0 | 0 | 0 | 0 | 0000011 | Switch 1 and 2 are turned on |
| 0000100 | 12 | 20 | 0 | 0 | 0 | 0 | 0 | 0 | 0000100 | Switch 3 is turned on |
| : | : | : | : | : | : | : | : | : | : | : |
| 1111110 | 8 | 4 | 4 | 4 | 4 | 4 | 4 | 0 | 1111110 | All switches except switch 1 are turned on |
| 1111111 | 4 | 4 | 4 | 4 | 4 | 4 | 4 | 4 | 1111111 | All switches are turned on |

EP 3 842 954 A1

Table 1 refers to the use of switches, which in turn refers to the use of the equivalent reconfigurable routing circuitry of FIG. 7. For example, switch 1 may refer to reconfigurable routing circuitry 728, switch 2 may refer to reconfigurable routing circuitry 730, reconfigurable routing circuitry 732, and so on. If the immediate encoding value is zero, this means the tile size is 32 and a single matrix is used as input for both the A and B inputs. Immediate encoding value 1111110 may enable all configuration switches except the first switch such that the complete systolic array 700 may be thought of 7 independent small arrays with first array capable of handling matrix size of 8 while all others handling matrix size of 4 each. Similarly, an immediate encoding value of 1111111 may enable all configuration switches such that complete systolic array circuitry 700 may be thought of 8 independent circuitry of small arrays, each circuitry capable of handling a matrix size of 4.

An instruction to enable and disable accumulation logic based on the previously described instructions that controls configuration switches may also be used, referred to herein as TACDP "tile accumulate dot product". It is to be noted that this instruction may be valid only with proper configuration switch values (i.e., accumulation logic may not be enabled if the configuration switch is not enabled, except for the last configuration switch for routing circuit 757 at the end of the pipe which may not be reconfigurable as it may not include a configuration switch). Accumulators may be enabled by passing the immediate value with the format TACDP imm_ac# or via an immediate value passed through the instruction (e.g. TP2DP tsrcdest, tsrc1, tsrc2, imm_sz#, imm_ac#). This TACDP instruction may also be merged with the TSZDP instruction (TSZDP imm_sz#, imm_ac#). The TACDP immediate encoding may be as follows:

Table 2

| Immediate encoding | Accumulation switch 1 | Accumulation switch 2 | Accumulation switch 3 | Accumulation switch 4 | Accumulation switch 5 | Accumulation switch 6 | Accumulation switch 7 | Accumulation switch 8 |
|---|---|---|---|---|---|---|---|---|
| 0000000 | 0 | 0 | 0 | 0 | 0 | 0 | 0 | 0 |
| 0000001 | 1 | 0 | 0 | 0 | 0 | 0 | 0 | 0 |
| 0000010 | 0 | 1 | 0 | 0 | 0 | 0 | 0 | 0 |
| 0000011 | 1 | 1 | 0 | 0 | 0 | 0 | 0 | 0 |
| 0000100 | 0 | 0 | 1 | 0 | 0 | 0 | 0 | 0 |
| ⋮ | ⋮ | ⋮ | ⋮ | ⋮ | ⋮ | ⋮ | ⋮ | ⋮ |
| 1111110 | 0 | 1 | 1 | 1 | 1 | 1 | 1 | 1 |
| 1111111 | 1 | 1 | 1 | 1 | 1 | 1 | 1 | 1 |

The bias addition with accumulation circuits (e.g., circuits 742, 744, 746, 748, 750, 752) may be enabled only when an accumulation switch (e.g., accumulation enable signal 522) is turned on or else certain data may not enter this section (e.g., bias addition with accumulation circuitry) of the reconfigurable systolic array 700. However, the bias addition circuit 756 which may not have an accumulation enable signal to be used. That is, routing circuitry 757 may route data directly to the bias addition circuit 756 only and may not provide switching capability. In some embodiments, the last bias addition with accumulation circuitry 752 may be operated assuming that accumulation is always switched on.

Accumulation logic may be enabled by two modes, a microarchitecture mode and an architecture mode. In the microarchitecture mode, the reconfigurable systolic array 700 and associated hardware may enable accumulation if it is identified that the previous destination (e.g., tile register tmm0) and the current destination address are the same, for example via the address check 532 shown in FIG. 5. In the architectural mode, accumulation may be enabled by the instructions for which logic is controlled by, either the TSZDP instruction or the TACDP. As mentioned earlier, Only the last bias addition circuit 756 may be turned on without a configuration switch as there is no configuration switch associated with the last group of processing element rows (e.g., circuit block 726 in the illustrated example).

FIG. 8 illustrates an embodiment of a process 800 that may be used to implement the techniques described herein. The process 800 may be implemented as hardware and/or software such as via the reconfigurable systolic arrays 300, 700, and the macroinstructions TPNDPMAC, TSZDP, and/or TACDP. In the depicted embodiment, it may be determined (block 802) tile sizes for a problem to be solved. The problem may include dense DNNs, sparse DNNs, or a combination thereof, as well as problems in machine learning, video processing, voice recognition, image recognition, data compression, database search ranking, bioinformatics, network security pattern identification, spatial navigation, or the like. For example, based on a number of rows and columns of the systolic array to be used (e.g., reconfigurable systolic array systems 300, 700), the tile sizes may be selected to more comfortably fit the array by minimizing, for example, added zeroes. Once the tile sizes are selected (block 802), a number of complete and/or incomplete tiles may be derived (block 804). Complete tiles 806 may fit in the systolic array to be used in their entirety, while incomplete tiles 808 may be subdivided into sub tiles.

The complete tiles 806 and incomplete tiles 808 may then be processed (block 810). For example, the microarchitecture mode may be used to execute the systolic array to be used and to automatically detect destination collisions and switch on accumulation logic if it is identified that the previous destination (e.g., tile register tmm0) and the current destination address are the same, for example via the address check 532 shown in FIG. 5. In the architectural mode, accumulation may be enabled by the instructions TSZDP instruction and/or TACDP. Results of the computations may then be provided (block 812). For example, a final C based on C += A*B may be provided for each of the matrix C's that were computed. It is to be understood that the circuitry described herein (e.g., reconfigurable systolic array systems 300, 700) may be implemented in a microprocessor, as part of a hardware accelerator, as a field programmable gate array (FPGA), as application specific integrated circuits (ASIC), as a custom microchip, or as a combination thereof.

While the embodiments set forth in the present disclosure may be susceptible to various modifications and alternative forms, specific embodiments have been shown by way of example in the drawings and have been described in detail herein. However, it may be understood that the disclosure is not intended to be limited to the particular forms disclosed. The disclosure is to cover all modifications, equivalents, and alternatives falling within the spirit and scope of the disclosure as defined by the following appended claims.

## Example Embodiments of the Disclosure

The following numbered clauses define certain example embodiments of the present disclosure.

EXAMPLE EMBODIMENT 1.

A system, comprising:

a data storage configured to store a data;
reconfigurable systolic array circuitry, comprising:

a first circuit block comprising one or more groups of processing elements configured to process the data;
a second circuit block comprising one or more groups of processing elements configured to process the data;
a first bias addition with accumulation circuitry configured to add a matrix bias to an accumulated value, to a multiplication product, or to a combination thereof; and
a first routing circuitry configured to route derivations from the first circuit block into the second circuit block, from the first circuit block into the first bias addition with accumulation circuitry, or into a combination thereof.

EXAMPLE EMBODIMENT 2.

The system of example embodiment 1, wherein the first routing circuitry comprises a demultiplexer and a multiplexer circuitry configured to route the derivations from the first circuit block into the second circuit block, from the first circuit block into the first bias addition with accumulation circuitry, or into the combination thereof, based on receiving a configuration switch signal.

EXAMPLE EMBODIMENT 3.

The system of example embodiment 1, wherein the first bias addition with accumulation circuitry comprises a storage circuitry configured to accumulate the multiplication product as the accumulated value based on a clock signal, and at least one adder configured to add the matrix bias to the accumulated value, to the multiplication product, or to the combination thereof.

EXAMPLE EMBODIMENT 4.

The system of example embodiment 3, wherein the first bias addition with accumulation circuitry comprises an adder latency of N and wherein the storage circuitry comprises N storage components.

EXAMPLE EMBODIMENT 5.

The system of example embodiment 4, wherein the N storage components each comprise a flip flop.

EXAMPLE EMBODIMENT 6.

The system of example embodiment 4, wherein the storage circuitry comprises N lines coupling the N storage components to a multiplexer and wherein the storage circuitry is configured to transit accumulated values from the N storage components to the multiplexer via the N lines if the adder latency exceeds N during operations.

EXAMPLE EMBODIMENT 7.

The system of example embodiment 6, wherein the first bias addition with accumulation circuitry is configured to add new values entering the first bias addition with accumulation circuitry to the accumulated values and to store the resultant addition in the N storage components.

EXAMPLE EMBODIMENT 8.

The system of example embodiment 1, comprising:

a third circuit block having one or more groups of processing elements;
a second bias addition with accumulation circuitry configured to add a second matrix bias to a second accumulated value, to the multiplication product, or to a combination thereof; and
a second routing circuitry configured to route derivations from the second circuit block into the third circuit block, from the second circuit block into the second bias addition with accumulation circuitry, or into a combination thereof.

EXAMPLE EMBODIMENT 9.

The system of example embodiment 8, comprising a bias addition circuitry disposed downstream of the third circuit block and configured to add a third matrix bias to outputs from the third circuit block.

EXAMPLE EMBODIMENT 10.

The system of example embodiment 1, comprising a host processor (CPU) configured to use the reconfigurable systolic array circuitry or to include the reconfigurable systolic array circuitry, wherein the CPU is configured to execute a "tile partial 'N' dot product with 'M' accumulate" instruction, where the N is a number of different matrices that have been merged together, and M is a number of matrices that are incomplete to be used as input into the reconfigurable systolic array circuitry, a "tile sizes for dot products" instruction having an immediate that specifies a size of the different matrices that have been merged together to be used as input into the reconfigurable systolic array circuitry, a "tile accumulate dot product" instruction that controls the first bias addition with accumulation circuitry, or a combination thereof.

EXAMPLE EMBODIMENT 11.

A method, comprising:

determining a tile size for each of one or more tiles of data based on a matrix A and a matrix B;
deriving a complete tile, an incomplete tile, or a combination thereof, based on tile size; and
processing the complete tile, the incomplete tile, or the combination thereof, via a reconfigurable systolic array circuitry to derive a matrix C result, wherein processing the complete tile, the incomplete tile, or the combination thereof comprises applying a routing circuitry included in the reconfigurable systolic array circuitry and a bias addition with accumulation circuitry included in the reconfigurable systolic array circuitry, or into a combination thereof, to provide the matrix C result.

EXAMPLE EMBODIMENT 12.

The method of example embodiment 11, wherein the reconfigurable systolic array circuitry comprises an array size of N rows by M columns and wherein the complete tile comprises a complete size having N rows or less and M columns or less, and wherein the incomplete tile comprises an incomplete size having more than N rows, more than M columns, or a combination thereof.

EXAMPLE EMBODIMENT 13.

The method of example embodiment 11, wherein applying the routing circuitry comprises routing derivations from a first circuit block comprising one or more groups of processing elements into a second circuit block comprising one or more groups of processing elements, routing derivations from the first circuit block into the bias addition with accumulation circuitry, or into a combination thereof.

EXAMPLE EMBODIMENT 14.

The method of example embodiment 13, wherein routing derivations from the first circuit block into the bias addition with accumulation circuitry comprises receiving the derivations at the bias addition with accumulation circuitry and accumulating the derivations into an accumulated value for addition into a matrix C bias.

EXAMPLE EMBODIMENT 15.

The method of example embodiment 11, wherein processing the complete tile, the incomplete tile, or the combination thereof, via the reconfigurable systolic array circuitry comprises applying a microarchitecture mode configured to detect a matrix C address collision and to automatically turn on an accumulation enable signal communicated to the bias addition with accumulation circuitry, applying an architecture mode by executing a "tile sizes for dot products" instruction having an immediate that specifies a size of the different matrices that have been merged together to be used as input into the reconfigurable systolic array circuitry, a "tile accumulate dot product" instruction that controls the bias addition with accumulation circuitry, or a combination thereof.

EXAMPLE EMBODIMENT 16.

An apparatus, comprising:

a data storage configured to store a data;
a reconfigurable systolic array circuitry;
a decoder, of a core coupled to the reconfigurable systolic array circuitry, to decode a single instruction into a decoded one or more instructions, the one or ore instructions configured to:

communicate the data representative of a matrix A and of a matrix B from the data storage into a first circuit block comprising one or more groups of processing elements configured to process the data and to provide a derivation based on the data; and
route the derivation from the first circuit block into a second circuit block, into a bias addition with accumulation circuitry, or into a combination thereof, based on switching on or off a reconfigurable routing circuitry, wherein the bias addition with accumulation circuitry is configured to add a matrix bias to an accumulated value, to a multiplication product of matrix A with matrix B, or to a combination thereof, and wherein the first circuit block, the second circuit block, the reconfigurable routing circuitry, the bias addition with accumulation circuitry, or a combination thereof, is included in the reconfigurable systolic array circuitry.

EXAMPLE EMBODIMENT 17.

The apparatus of example embodiment 16, wherein the single instruction, when decoded, uses an architecture mode via a "tile sizes for dot products" instruction having an immediate that specifies a size of different matrices that have been merged together to be used as input into the reconfigurable systolic array circuitry, a "tile accumulate dot product" instruction that controls the bias addition with accumulation circuitry, or a combination thereof.

EXAMPLE EMBODIMENT 18.

The apparatus of example embodiment 17, wherein the single instruction comprises a "tile partial 'N' dot product with 'M' accumulate" instruction, where the N is a number of different matrices that have been merged together, and M is a number of matrices that are incomplete to be used as input into the reconfigurable systolic array circuitry.

EXAMPLE EMBODIMENT 19.

The apparatus of example embodiment 16, wherein the single instruction, when decoded, causes the reconfigurable systolic array circuitry to solve for C =+ A*B by using the data, and wherein the data is representative of the matrix A and of the matrix B.

EXAMPLE EMBODIMENT 20.

The apparatus of example embodiment 16, comprising circuitry having the reconfigurable systolic array circuitry, wherein the circuitry comprises a microprocessor, hardware accelerator, a field programmable gate array (FPGA), application specific integrated circuits (ASIC), a custom microchip, or a combination thereof.

**Claims**

1. A system, comprising:

    a data storage configured to store a data;
    reconfigurable systolic array circuitry, comprising:

        a first circuit block comprising one or more groups of processing elements configured to process the data;
        a second circuit block comprising one or more groups of processing elements configured to process the data;
        a first bias addition with accumulation circuitry configured to add a matrix bias to an accumulated value, to a multiplication product, or to a combination thereof; and
        a first routing circuitry configured to route derivations from the first circuit block into the second circuit block, from the first circuit block into the first bias addition with accumulation circuitry, or into a combination thereof.

2. The system of claim 1, wherein the first routing circuitry comprises a demultiplexer and a multiplexer circuitry configured to route the derivations from the first circuit block into the second circuit block, from the first circuit block into the first bias addition with accumulation circuitry, or into the combination thereof, based on receiving a configuration switch signal.

3. The system of claims 1 or 2, wherein the first bias addition with accumulation circuitry comprises a storage circuitry configured to accumulate the multiplication product as the accumulated value based on a clock signal, and at least one adder configured to add the matrix bias to the accumulated value, to the multiplication product, or to the combination thereof.

4. The system of claim 3, wherein the first bias addition with accumulation circuitry comprises an adder latency of N and wherein the storage circuitry comprises N storage components.

**5.** The system of claim 4, wherein the N storage components each comprise a flip flop.

**6.** The system of claim 4, wherein the storage circuitry comprises N lines coupling the N storage components to a multiplexer and wherein the storage circuitry is configured to transmit accumulated values from the N storage components to the multiplexer via the N lines if the adder latency exceeds N during operations.

**7.** The system of claim 6, wherein the first bias addition with accumulation circuitry is configured to add new values entering the first bias addition with accumulation circuitry to the accumulated values and to store the resultant addition in the N storage components.

**8.** The system of any of the preceding claims, comprising:

a third circuit block having one or more groups of processing elements;
a second bias addition with accumulation circuitry configured to add a second matrix bias to a second accumulated value, to the multiplication product, or to a combination thereof; and
a second routing circuitry configured to route derivations from the second circuit block into the third circuit block, from the second circuit block into the second bias addition with accumulation circuitry, or into a combination thereof.

**9.** The system of claim 8, comprising a bias addition circuitry disposed downstream of the third circuit block and configured to add a third matrix bias to outputs from the third circuit block.

**10.** The system of any of the preceding claims, comprising a host processor (CPU) configured to use the reconfigurable systolic array circuitry or to include the reconfigurable systolic array circuitry, wherein the CPU is configured to execute a "tile partial 'N' dot product with 'M' accumulate" instruction, where the N is a number of different matrices that have been merged together, and M is a number of matrices that are incomplete to be used as input into the reconfigurable systolic array circuitry, a "tile sizes for dot products" instruction having an immediate that specifies a size of the different matrices that have been merged together to be used as input into the reconfigurable systolic array circuitry, a "tile accumulate dot product" instruction that controls the first bias addition with accumulation circuitry, or a combination thereof.

**11.** A method, comprising:

determining a tile size for each of one or more tiles of data based on a matrix A and a matrix B;
deriving a complete tile, an incomplete tile, or a combination thereof, based on tile size; and
processing the complete tile, the incomplete tile, or the combination thereof, via a reconfigurable systolic array circuitry to derive a matrix C result, wherein processing the complete tile, the incomplete tile, or the combination thereof comprises applying a routing circuitry included in the reconfigurable systolic array circuitry and a bias addition with accumulation circuitry included in the reconfigurable systolic array circuitry, or into a combination thereof, to provide the matrix C result.

**12.** The method of claim 11, wherein the reconfigurable systolic array circuitry comprises an array size of N rows by M columns and wherein the complete tile comprises a complete size having N rows or less and M columns or less, and wherein the incomplete tile comprises an incomplete size having more than N rows, more than M columns, or a combination thereof.

**13.** The method of claims 11 or 12, wherein applying the routing circuitry comprises routing derivations from a first circuit block comprising one or more groups of processing elements into a second circuit block comprising one or more groups of processing elements, routing derivations from the first circuit block into the bias addition with accumulation circuitry, or into a combination thereof.

**14.** The method of claim 13, wherein routing derivations from the first circuit block into the bias addition with accumulation circuitry comprises receiving the derivations at the bias addition with accumulation circuitry and accumulating the derivations into an accumulated value for addition into a matrix C bias.

**15.** The method of any of the preceding claims, wherein processing the complete tile, the incomplete tile, or the combination thereof, via the reconfigurable systolic array circuitry comprises applying a microarchitecture mode configured to detect a matrix C address collision and to automatically turn on an accumulation enable signal communicated to the bias addition with accumulation circuitry, applying an architecture mode by executing a "tile sizes for dot products" instruction having an immediate that specifies a size of the different matrices that have been merged together to be used as input into the reconfigurable systolic array circuitry, a "tile accumulate dot product" instruction that controls the bias addition with accumulation circuitry, or a combination thereof.

100

DATA PROCESSING SYSTEM

106 — NETWORK INTERFACE

110

102 — PROCESSOR(S)

114

112

104 — MEMORY / STORAGE

108 — I/O SYSTEM(S)

FIG. 1

800

| DETERMINE TILE SIZES | — 802 |

| DERIVE COMPLETE AND / OR INCOMPLETE TILES | — 804 |

806 — COMPLETE TILES

INCOMPLETE TILES — 808

| PROCESS TILES | — 810 |

| PROVIDE RESULTS | — 812 |

FIG. 8

FIG. 2

FIG. 3

FIG. 4

FIG. 5

EP 3 842 954 A1

FIG. 6

EP 3 842 954 A1

FIG. 7

Europäisches
Patentamt

European
Patent Office

Office européen
des brevets

# EUROPEAN SEARCH REPORT

Application Number

EP 20 19 8103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/267938 A1 (CHEN CHIA-YU [US] ET AL) 20 September 2018 (2018-09-20)<br>* figures 1, 4 *<br>* paragraph [0043] - paragraph [0045] *<br>* paragraph [0050] - paragraph [0053] *<br>----- | 1-15 | INV.<br>G06F15/80<br>G06N3/063 |
| X | US 2016/342893 A1 (ROSS JONATHAN [US] ET AL) 24 November 2016 (2016-11-24)<br>* figures 4,5,7, 11 *<br>* paragraph [0007] - paragraph [0010] *<br>* paragraph [0041] - paragraph [0055] *<br>* paragraph [0061] - paragraph [0065] *<br>* paragraph [0086] - paragraph [0109] *<br>----- | 1-15 | |
| A | US 2019/042250 A1 (ANDERS MARK A [US] ET AL) 7 February 2019 (2019-02-07)<br>* figures 2,4 *<br>* paragraph [0044] - paragraph [0079] *<br>----- | 1-15 | |
| | | | TECHNICAL FIELDS SEARCHED (IPC)<br><br>G06F<br>G06N |

The present search report has been drawn up for all claims

| Place of search | Date of completion of the search | Examiner |
|---|---|---|
| The Hague | 15 March 2021 | De Poy, Iker |

## ANNEX TO THE EUROPEAN SEARCH REPORT
## ON EUROPEAN PATENT APPLICATION NO.

EP 20 19 8103

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2021

| Patent document cited in search report | | | Publication date | Patent family member(s) | | | Publication date |
|---|---|---|---|---|---|---|---|
| US | 2018267938 | A1 | 20-09-2018 | US | 2018267936 | A1 | 20-09-2018 |
| | | | | US | 2018267938 | A1 | 20-09-2018 |
| | | | | US | 2019236113 | A1 | 01-08-2019 |
| | | | | US | 2020012706 | A1 | 09-01-2020 |
| US | 2016342893 | A1 | 24-11-2016 | DE | 202016107446 | U1 | 18-01-2017 |
| | | | | TW | 201706917 | A | 16-02-2017 |
| | | | | TW | 201830297 | A | 16-08-2018 |
| | | | | US | 2016342893 | A1 | 24-11-2016 |
| | | | | US | 2017103318 | A1 | 13-04-2017 |
| | | | | US | 2018107921 | A1 | 19-04-2018 |
| | | | | US | 2020250520 | A1 | 06-08-2020 |
| | | | | WO | 2016186826 | A1 | 24-11-2016 |
| US | 2019042250 | A1 | 07-02-2019 | CN | 110580175 | A | 17-12-2019 |
| | | | | CN | 112099852 | A | 18-12-2020 |
| | | | | EP | 3579117 | A1 | 11-12-2019 |
| | | | | EP | 3772000 | A1 | 03-02-2021 |
| | | | | US | 2019042250 | A1 | 07-02-2019 |
| | | | | US | 2020334038 | A1 | 22-10-2020 |

EPO FORM P0459

For more details about this annex : see Official Journal of the European Patent Office, No. 12/82